# EUROPÄISCHE PATENTSCHRIFT

(11) **EP 1 005 228 B1**
(45) Veröffentlichungstag und Bekanntmachung des Hinweises auf die Patenterteilung: **23.05.2012**
(21) Anmeldenummer: 99890253.0
(22) Anmeldetag: 30.07.1999
(51) Int. Cl.: H04N 7/20, H04N 7/10

(54) **Schaltung zum Übertragen von analog und/oder digital empfangenen Daten**
Circuit for the transmission of signals received analog and/or digital
Circuit pour la transmission des signaux reçus sous forme analogique et/ou numérique

(30) Priorität: 27.11.1998 AT 199298
(43) Veröffentlichungstag der Anmeldung: 31.05.2000
(73) Patentinhaber: Faller, Josef, 9853 Gmünd (AT)
(72) Erfinder: Faller, Josef, 9853 Gmünd (AT)
(74) Vertreter: Hehenberger, Reinhard

(56) Entgegenhaltungen:
- EP-A- 0 777 349
- WO-A-94/14279
- DE-U- 29 721 331
- US-A- 5 485 630

## Beschreibung

Die Erfindung betrifft eine Schaltung zum Übertragen von analog und/oder digital empfangenen Daten.

Fernseh- und Rundfunkprogramme werden über terrestrische Antennen oder Satelliten-Antennen empfangen und im Frequenzbereich von 30 bis 2400 MHZ über Koaxialkabel übertragen. Die Übertragung von analogen und digitalen Fernseh- und Radioprogrammen sowie digitalen Daten (z.B. Internet) über Satellit erfolgt im Downlink im Frequenzbereich 11 bis 12 GHZ. Aus Gründen der Entkoppelung wird von den Satelliten in zirkular bzw. horizontal und vertikal polarisierten "Frequenzkanäle" übertragen. Der Frequenzbereich wird dann in sogenannten "Low-Noise-Konvertern" in die erste SAT-Zwischenfrequenz im Frequenzbereich von 950 bis 2050 MHZ umgesetzt.

Auf Grund der zirkularen, vertikalen und horizontalen Polarisierung kann in sich überlappenden Frequenzbereichen zwar empfangen, nicht aber gleichzeitig über ein Koaxialkabel übertragen werden. Um die unterschiedlichen Frequenzbereiche bzw. Programminhalte zum Endgerät zu übertragen, gibt es derzeit folgende Verfahren.

Bei der selektiven Übertragung von ausgewählten Programmen werden diese von der ersten SAT-Zwischenfrequenz über programmierbare Frequenzumsetzer in den Frequenzbereich 40 bis 800 MHZ umgesetzt und über ein Koaxialkabel parallel zu den Endgeräten übertragen. Bei diesem Verfahren steht dem Endgerät die in einer zentralen Kopfstation aufbereitete Anzahl von Programmen zur Verfügung. Eine individuelle Änderung der Programme durch den Benützer vom Endgerät aus ist nicht möglich.

Eine alternative Variante ist die Steuerung mehrerer Satellitenempfänger über ein Fernsteuermodul. Dabei werden die Satellitenempfänger über eine RF-Fernsteuerung oder ein über eine Netzleitung übertragenes Datenprotokoll von einem Endgerät aus bedient. Kennzeichnend für diese Variante ist, dass die Signalübertragung über HF- und Koaxialkabel erfolgt, die Steuerung der Geräte jedoch über ein anderes Medium, wie z.B. RF, eine eigene Steuerleitung oder ein auf die Netzleitung aufmoduliertes Steuersignal.

Weiters ist die selektive Übertragung von Frequenzbereichen bekannt, und zwar über Multischalter und eine Verteilung im Bereich von 30 bis 800 und 950 bis 2050 MHZ. Bei dieser Programmselektion über Multischalter wird von unterschiedlich polarisierten Frequenzbereichen von unterschiedlichen Satelliten über eine Schaltmatrix ein Frequenzbereich bestimmter Polarisation ausgewählt und auf die jeweilige Zuleitung zum Satellitenempfänger/Endgerät geschaltet. Es wird somit ein bestimmter Frequenzbereich bestimmter Polarisation zum Endgerät übertragen. Die Umschaltung kann durch eine Änderung der Versorgungsspannung (14/18 V) oder über ein auf das Koaxialkabel aufmoduliertes HF-Signal (22 KHZ) oder ein aufmoduliertes, digitales Signal (DiSEqC) durchgeführt werden. Bei diesem Verfahren stehen dem Teilnehmer pro Ableitung eine dem Frequenzbereich bestimmter Polarisation entsprechende Anzahl von Programmcontainern oder Programmen zur Verfügung. Der Nachteil bei dieser Technik liegt darin, dass pro Koaxialkabel (pro Ableitung) jeweils nur ein bestimmter Frequenzbereich einer Polarisation übertragen werden kann. Dadurch stehen dem Endgerät nur die Programminhalte in diesem selektiven Frequenzbereich zur Verfügung. Um mehreren Endgeräten (z.B. TV, SAT-Empfänger, Video-Recorder, HiFi-Anlage oder PC) den Zugriff auf das volle Programmangebot zu ermöglichen, ist jeweils eine eigene Verkabelung zwischen dem Multischalter und dem Endgerät erforderlich. In bestimmten Anwendungen werden daher in Mehrteilnehmer-Anlagen bis zu acht Koaxialkabel zu Multischaltern in Geschoßen oder untergeordneten Verteilpunkten geführt.

Bei allen bekannten Verfahren erfolgt die Signalübertragung über 75 Ohm-Koaxialkabel.

Aus der WO 94/14279 A ist eine Schaltung zum Übertragen von Daten unterschiedlicher Signalquellen bekannt, bei der die Daten einem Schaltungsteil über wenigstens zwei Eingänge zugeführt werden. Dem Schaltungsteil ist an einem Eingang ein Encoder vorgeschaltet, in dem analoge Daten digitalisiert werden. Der Schaltungsteil wird von einer zentralen Steuereinheit gesteuert.

Der Erfindung liegt die Aufgabe zu Grunde, alle von der Anlage empfangenen Daten uneingeschränkt zu allen Endgeräten übertragen zu können.

Gelöst wird diese Aufgabe mit einer Schaltung mit den Merkmalen des Anspruches 1.

Die Erfindung baut auf dem Konzept auf, grundsätzlich nur digitalisierte Daten über einen seriellen Daten-Bus zu übertragen, so dass es zu keinem Konflikt überlappender Frequenzbereiche kommen kann. Soferne der Schaltung analoge Daten zugeführt werden, werden diese in einem Empfängermodul digitalisiert. Schließlich kann die Schaltung über das Endgerät gesteuert werden, d.h. es ist eine gezielte Auswahl aus allen über Satellit oder terrestrische Übertragungseinrichtungen der Schaltung zugeführten Daten bzw. Programminhalten möglich, da sich der Daten-Bus für eine bidirektionale Datenübertragung als Steuerleitung eignet. Die nicht gewünschten Programme oder Programmcontainer (digitale Daten) müssen nicht über den Daten-Bus übertragen werden.

Das Prinzip der Erfindung beruht also darauf, dass sowohl die Umschaltung bzw. Auswahl der empfangenen Frequenzbereiche, die Auswahl der unterschiedlichen Programminhalte, die Registrierung sämtlicher verfügbarer Informationen (z.B. Programminhalte, Programme) und deren Status, sowie die Übertragung der ausgewählten Daten über einen seriellen Datenbus und ein gemeinsames Übertragungsmedium zu einem oder mehreren Endgeräten erfolgt.

Dabei ist die Anzahl der Endgeräte, die uneingeschränkten Zugang zu allen Eingangsinformationen haben, abhängig von der Bandbreite des seriellen Datenbuses.

Umgekehrt können alle von der Anlage empfangenen Signale oder Daten uneingeschränkt von einem oder mehreren Endgeräten zugleich ausgewählt und über den seriellen Datenbus übertragen werden.

Vorteile liegen zudem:
a) in der vereinfachten Verkabelung bzw. Nutzung eines Übertragungsmediums, das in weiterer Folge auch für bidirektionale Datenübertragung genutzt werden kann;
b) in der kostengünstigeren Realisierung zur Übertragung von mehreren Programmen, da z.B. die Signalumsetzung auf ein QAM Signal durch einen einfachen Datenbus-Knoten ersetzt wird;
c) in der Möglichkeit der direkten Anbindung an ein In-Haus Multimedia-Netzwerk mit Geräten mit digitaler serieller Datenbus-Schnittstelle;
d) in der modularen Erweiterbarkeit des gesamten Netzwerkes ohne zusätzlichen Installationsaufwand in der Zuleitung zum digitalen Programmschalter;
e) in der Nutzung einer seriellen Bustechnologie, die eine automatische Registrierung und Installation des digitalen Programmschalters in den Endgeräten mit digitaler Schnittstelle (z.B. nach IEEE 1394) ermöglicht (Selbstkonfiguration, Plug and Play)

Die an den Eingängen der Schaltung anstehenden SHF-Signale sowie deren Programminhalte werden in der Steuereinheit abgebildet und erscheinen über den seriellen Datenbus an einem oder mehreren Endgeräten vorzugsweise als einheitliches Empfangsgerät.

Je nachdem, ob die zugespielten Daten analog oder digital sind, kann entweder vorgesehen sein, dass das Empfängermodul einen analogen Dateneingang aufweist und die analogen Daten in digitale Daten umwandelt oder dass das Empfängermodul einen digitalen Dateneingang aufweist.

Um einen möglichst flexiblen Einsatz der erfindungsgemäßen Schaltung zu ermöglichen, ist idealerweise aber vorgesehen, dass zwei oder mehr Empfängermodule mit der Schalteinheit verbunden sind, wobei vorzugsweise wenigstens ein Empfängermodul einen analogen Dateneingang und wenigstens ein Empfängermodul einen digitalen Dateneingang aufweist.

Auf diese Weise können mit der erfindungsgemäßen Schaltung sowohl analog als auch digital empfangene Daten übertragen werden. Der über das Endgerät und die Schalteinheit gewählte Frequenzbereich wird dann je nachdem, ob es sich um analoge oder digitale Daten handelt, einem entsprechenden Empfängermodul zugeführt. Im Empfängermodul wird ein Programm oder ein Programmcontainer, gegebenenfalls nach der Digitalisierung, in einen digitalen Datenstrom umgewandelt, der dann über einen Bus-Knoten in den seriellen Daten-Bus eingespeist wird. Der Datenstrom wird dann über den seriellen Daten-Bus (z.B. nach IEEE 1394) zu dem oder den Endgeräten übertragen.

Da die Anzahl der übertragbaren Programminhalte von der verfügbaren Bandbreite des Daten-Busses abhängig ist, kann gemäß einer bevorzugten Ausführungsform der Erfindung vorgesehen sein, dass zwei oder mehr serielle Daten-Busse angeschlossen sind. Diese Ausführungsform eignet sich auch für räumlich weit verzweigte Daten-Netze. In dieser Variante kann die Versorgung von einander unabhängigen Clustern von Endgeräten (z.B. getrennte Haushalte) über eine gemeinsame, erfindungsgemäße Satelliten-Schaltung ermöglicht werden. Diese sind voneinander über sogenannte Bridges entkoppelt.

Des weiteren können, wenn sehr viele externe Datenanschlüsse vorgesehen sind, zwei oder mehr Schalteinheiten vorgesehen sein, die mit einer Übertragungseinrichtung, an welche der Daten-Bus angeschlossen ist, verbunden sind. In diesem Fall können z.B. zwei Schalteinheiten vorgesehen sein, wobei eine Schalteinheit mit Empfängermodulen mit analogem Dateneingang und eine andere Schalteinheit mit Empfängermodulen mit digitalem Dateneingang verbunden sein kann. In diesem Fall sind alle Kanäle mit digitalen Programmen oder Daten an eine Schalteinheit mit einem oder mehreren entsprechenden Empfängermodulen angeschlossen und alle Kanäle mit analogen Daten oder Programmen an eine Schalteinheit mit einem oder mehreren entsprechenden Empfängermodulen mit analogen Dateneingängen.

Weiter Merkmale und Vorteile der Erfindung ergeben sich aus der nachfolgenden Beschreibung von Ausführungsbeispielen der Erfindung unter Bezugnahme auf die Zeichnungen.

Es zeigt
Fig. 1 ein Grundkonzept der erfindungsgemäßen Schaltung,
Fig. 2 die Schaltung von Fig. 1 mit einem angeschlossenen Decoder-Modul und
Fig. 3 eine modular aufgebaute, erweiterte Schaltung.

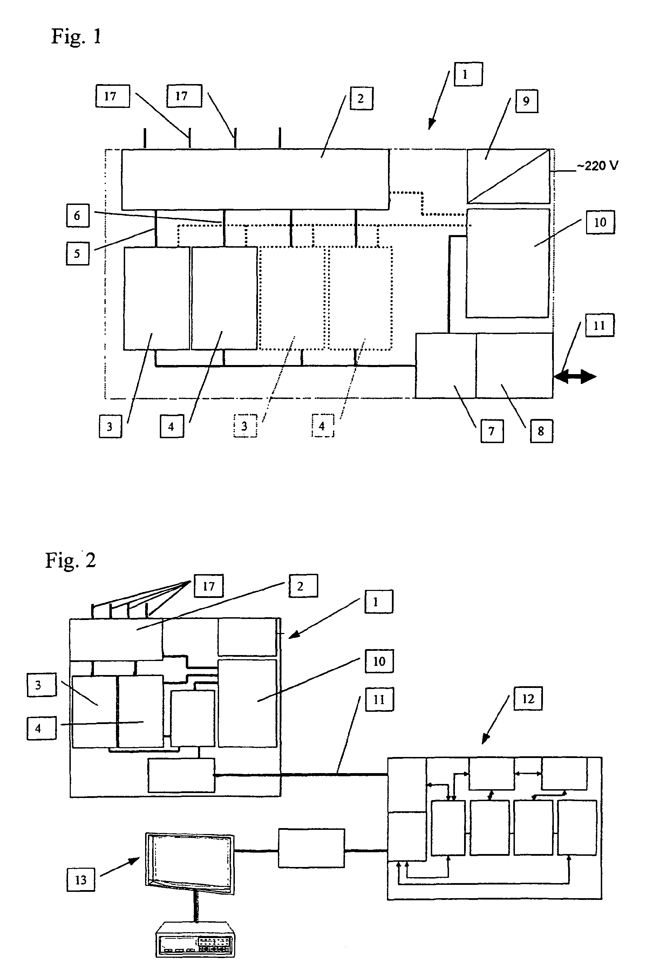

In Fig. 1 ist eine erfindungsgemäße Schaltung 1 dargestellt, die eine Schalteinheit 2 in Form eines sogenannten Multischalters aufweist, an die Kabel 17 von Satellitenempfängern, Telekommunikationleitungen usw. angeschlossen sind. Der Schalteinheit 2 sind zwei Empfängermodule 3, 4 nachgeschaltet, wobei z.B. das Empfängermodul 3 mit einem analogen Dateneingang 5 und das Empfängermodul 4 mit einem digitalen Dateneingang 6 ausgestattet sein kann. Im Empfängermodul 3 werden die zugeführten Daten digitalisiert. Bei Bedarf können die digitalen Datenströme der Empfängermodule 3 und 4 anschließend komprimiert werden, worauf sie einem seriellen Bus-Knoten 7 und 8 zugeführt werden. Eine Stromversorgung 9 ist ebenfalls vorgesehen.

Zur Steuerung der Schaltung 1 ist eine Steuereinheit 10 in Form eines Mikrokontrollers oder Mikroprozessors vorgesehen, der die Schalteinheit 2, die Empfängermodule 3, 4 und den Bus-Knoten 7, 8 steuert bzw. koordiniert. Der Mikrokontroller 10 seinerseits erhält seine Steuerbefehle über die Daten-Bus-Leitung 11 und den Bus-Knoten 7, 8 von einem oder mehreren nicht dargestellten Endgerät, beispielsweise einem Fernseher oder einem PC, an dem ausgewählt wird, welche der Schalteinheit 2 zugeführte Daten zum Endgerät übertragen werden sollen. Die ausgewählten Daten bzw. Programme werden dann von der Schalteinheit 2 über das analoge oder digitale Empfängermodul 3, 4, gegebenenfalls als Programmcontainer und komprimiert, über den Bus-Knoten 7, 8 und die serielle Daten-Bus-Leitung 11 zum Endgerät übertragen. An einer Daten-Bus-Leitung 11 können im Rahmen der technischen Möglichkeiten mehrere Endgeräte angeschlossen sein, wobei es durch die serielle Übertragung von digitalisierten Daten nicht zu einer Überlagerung von Frequenzbereichen kommen kann, so dass jedem Endgerät alle der Schalteinheit 2 zugeführten Programme oder Frequenzbereiche, egal ob diese nun zirkular, horizontal oder vertikal polarisiert übertragen wurden, zur Verfügung stehen.

In Fig. 2 ist wieder die in Fig. 1 dargestellte Schaltung 1 dargestellt, die über die Daten-Bus-Leitung 11 mit einem externen Decoder-Modul 12 und weiter mit einem Fernseher 13 verbunden ist. Es ist natürlich möglich, das Decoder-Modul 12 in die Schaltung 1 zu integrieren oder in Modulbauweise an die Schaltung 1 anschließbar zu gestalten.

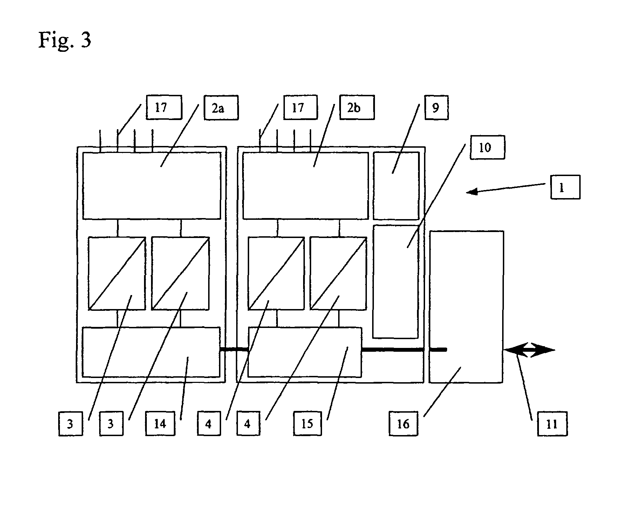

In Fig. 3 ist eine geänderte Ausführungsform einer erfindungsgemäßen Schaltung dargestellt, die zwei Schalteinheiten 2a, 2b aufweist. Der Schalteinheit 2a sind zwei Empfängermodule 3 nachgeschaltet, die digitale Dateneingänge und eine Signalaufbereitung aufweisen. Den Empfängermodulen 3 nachgeschaltet ist ein Bus-Knoten 14. Die Schalteinheit 2b ist mit zwei parallelen Empfängermodulen 4 mit analogen Dateneingängen verbunden, denen ebenfalls ein Bus-Knoten 15 nachgeschaltet ist. Die Bus-Knoten 14, 15 sind ihrerseits vorzugsweise mit einer Übertragungseinrichtung 16 verbunden, an welche der Daten-Bus 11 angeschlossen ist. Die Übertragungseinrichtung 16 dient zum Anschluss unterschiedlicher Übertragungsmedien, wie Kupferkabel, Lichtwellenleiter oder Funk, als Daten-Bus.

Da der Daten-Bus zur bidirektionalen Datenübertragung geeignet ist, ist eine umfassende Steuerung der Schaltung 1 vom Endgerät aus möglich. Des weiteren ist es möglich, in der Schaltung 1 einen weiteren Ausgang für die Daten-Bus-Leitung für bidirektionale Datenübertragung, z.B. ein Sende- und/oder Empfangsmodul, vorzusehen.

Die Schaltung und insbesondere die Schalteinheit 2, 2a, 2b und die Empfängermodule 3, 4 können modular aufgebaut und erweiterbar sein, was den Vorteil bietet, dass die gesamte Schaltung 1 je nach möglicher Bandbreite des Busses steckbar erweitert werden kann.

Da mit der erfindungsgemäßen Schaltung sowohl analog als auch digital empfangene Daten übertragen werden können, können an die Schalteinheit nicht nur Satellitenantennen angeschlossen werden, sondern auch digitale und analoge Telekommunikationsleitungen, Videoanschlüsse und dgl. mehr.

## Patentansprüche

1. Schaltung (1) zum Übertragen von Daten unterschiedlicher Signalquellen mit einer steuerbaren Schalteinheit (2, 2a, 2b), welcher die Daten über wenigstens zwei Eingänge (17) zugeführt werden, wenigstens zwei nachgeschalteten Empfängermodulen(3, 4), wobei in wenigstens einem Empfängermodul (3, 4)der Schaltung zugeführte analoge Daten digitalisiert werden können, mit einer zentralen Steuereinheit (10), welche die Schalteinheit (2) und die Empfängermodule (3, 4) steuert, und mit einem seriellen, zur bidirektionalen Übertragung geeigneten Daten-Bus (11), über welchen die Daten von den Empfängermodulen (3, 4) zu wenigstens einem Endgerät (13) übertragen werden, wobei das Endgerät (13) die zentrale Steuereinheit (10) über den Daten-Bus (11) steuert.

2. Schaltung nach Anspruch 1, **dadurch gekennzeichnet, dass** das Empfängermodul (3, 4) einen analogen Dateneingang aufweist und die analogen Daten in digitale Daten umwandelt.

3. Schaltung nach Anspruch 1, **dadurch gekennzeichnet, dass** das Empfängermodul (3, 4) einen digitalen Dateneingang aufweist.

4. Schaltung nach einem der Ansprüche 1 bis 3, **dadurch gekennzeichnet, dass** zwei oder mehr Empfängermodule (3, 4) mit der Schalteinheit (2) verbunden sind, wobei vorzugsweise wenigstens ein Empfängermodul (3) einen analogen Dateneingang und wenigstens ein Empfängermodul (4) einen digitalen Dateneingang aufweist.

5. Schaltung nach einem der Ansprüche 1 bis 4, **dadurch gekennzeichnet, dass** zwei oder mehr serielle Daten-Busse (11) angeschlossen sind.

6. Schaltung nach Anspruch 5, **dadurch gekennzeichnet, dass** die seriellen Daten-Busse (11) voneinander über Bridges entkoppelt sind.

7. Schaltung nach einem der Ansprüche 1 bis 6, **dadurch gekennzeichnet, dass** zwei oder mehr Schalteinheiten (2) vorgesehen sind, die mit einer Übertragungseinrichtung (16), an welche der Daten-Bus (11) angeschlossen ist, verbunden sind.

8. Schaltung nach Anspruch 7, **dadurch gekennzeichnet, dass** eine Schalteinheit (2b) mit Empfängermodulen (4) mit analogem Dateneingang und eine andere Schalteinheit (2a) mit Empfängermodulen (3) mit digitalem Dateneingang verbunden ist.

9. Schaltung nach einem der Ansprüche 1 bis 8, **dadurch gekennzeichnet, dass** die zentrale Steuereinheit einen seriellen Bus-Knoten (7, 8) für den Daten-Bus (11) steuert.

10. Schaltung nach einem der Ansprüche 1 bis 9, **dadurch gekennzeichnet, dass** sie einen Decoder aufweist, welcher über den seriellen Daten-Bus (11) angeschlossen ist.

11. Schaltung nach einem der Ansprüche 1 bis 10, **dadurch gekennzeichnet, dass** einzelne Empfängermodule (3, 4) modular ausgeführt sind.

12. Schaltung nach Anspruch 11, **dadurch gekennzeichnet, dass** die Schalteinheit (2) und die Empfängermodule (3, 4) modular erweiterbar ausgeführt sind.

13. Schaltung nach einem der Ansprüche 1 bis 12, **dadurch gekennzeichnet, dass** über den seriellen Datenbus ein Sendemodul von einem oder mehreren Endgeräten ansteuerbar ist.

14. Schaltung nach Anspruch 13, **dadurch gekennzeichnet, dass** über den seriellen Daten-Bus (11) ein kombiniertes Sende- und Empfangsmodul von einem oder mehreren Endgeräten ansteuerbar ist.

15. Schaltung nach einem der Ansprüche 1 bis 14, **dadurch gekennzeichnet, dass** die Schalteinheit (2) ein Multischalter ist.

16. Schaltung nach einem der Ansprüche 1 bis 15, **dadurch gekennzeichnet, dass** über das Endgerät (13) und die Schalteinheit (2) ein Frequenzbereich auswählbar ist und dass die Daten, je nach dem, ob es sich um analoge oder digitale Daten handelt, einem entsprechenden Empfängermodul (3, 4) zugeführt werden.

## Claims

1. A circuit (1) for transmitting data of different signal sources with a controllable switch unit (2, 2a, 2b), to which the data are supplied via at least two inputs (17), at least two downstream receiver modules (3, 4), wherein analogue data supplied to the circuit can be digitised in at least one receiver module (3, 4), with a central control unit (10) which controls the switch unit (2) and the receiver modules (3, 4), and with a serial data bus (11) suitable for bi-directional transmission, by means of which the data are transmitted from the receiver modules (3, 4) to at least one terminal (13), wherein the terminal (13) controls the central control unit (10) via the data bus (11).

2. The circuit according to Claim 1, **characterised in that** the receiver module (3, 4) has an analogue data input and converts the analogue data into digital data.

3. The circuit according to Claim 1, **characterised in that** the receiver module (3, 4) has a digital data input.

4. The circuit according to one of Claims 1 to 3, **characterised in that** two or more receiver modules (3, 4) are connected to the switch unit (2), wherein preferably at least one receiver module (3) has an analogue data input and at least one receiver module (4) has a digital data input.

5. The circuit according to one of Claims 1 to 4, **characterised in that** two or more serial data buses (11) are connected.

6. The circuit according to Claim 5, **characterised in that** the serial data buses (11) are decoupled from one another via bridges.

7. The circuit according to one of Claims 1 to 6, **characterised in that** two or more switch units (2) are provided, which are connected to a transmitting device (16), to which the data bus (11) is connected.

8. The circuit according to Claim 7, **characterised in that** a switch unit (2b) is connected to receiver modules (4) with analogue data input and another switch unit (2a) is connected to receiver modules (3) with digital data input.

9. The circuit according to one of Claims 1 to 8, **characterised in that** the central control unit controls a serial bus node (7, 8) for the data bus (11).

10. The circuit according to one of Claims 1 to 9, **characterised in that** it has a decoder which is connected via the serial data bus (11).

11. The circuit according to one of Claims 1 to 10, **characterised in that** individual receiver modules (3, 4) are of modular configuration.

12. The circuit according to Claim 11, **characterised in that** the switch unit (2) and the receiver modules (3, 4) are configured to be modularly expandable.

13. The circuit according to one of Claims 1 to 12, **characterised in that** a transmitting module can be controlled by one or a plurality of terminals via the serial data bus.

14. The circuit according to Claim 13, **characterised in that** a combined transmitting and receiving module can be controlled by one or a plurality of terminals via the serial data bus (11).

15. The circuit according to one of Claims 1 to 14, **characterised in that** the switch unit (2) is a multiswitch.

16. The circuit according to one of Claims 1 to 15, **characterised in that** a frequency range is selectable via the terminal (13) and the switch unit (2) and **in that** the data are supplied to a corresponding receiver module (3, 4), depending on whether one is concerned with analogue or digital data.

## Revendications

1. Circuit (1) pour la transmission de données de sources de signal différentes comprenant une unité de commutation (2, 2a, 2b) contrôlable, à laquelle les données sont amenées par au moins deux entrées (17), au moins deux modules récepteurs (3, 4) montés en aval, des données analogiques amenées au circuit pouvant être numérisées dans au moins un module récepteur (3, 4), une unité de commande centrale (10), laquelle commande l'unité de commutation (2) et les modules récepteurs (3, 4), et un bus de données (11) série, approprié pour la transmission bidirectionnelle, par lequel les données sont transmises des modules récepteurs (3, 4) à au moins un terminal (13), le terminal (13) commandant l'unité de commande (10) centrale par l'intermédiaire du bus de données (11).

2. Circuit selon la revendication 1, **caractérisé en ce que** le module récepteur (3, 4) présente une entrée de données analogique et les données analogiques sont converties en données numériques.

3. Circuit selon la revendication 1, **caractérisé en ce que** le module récepteur (3, 4) présente une entrée de données numériques.

4. Circuit selon l'une des revendications 1 à 3, **caractérisé en ce que** deux ou plus de deux modules récepteurs (3, 4) sont reliés à l'unité de commutation (2), de préférence au moins un module récepteur (3) présentant une entrée de données analogique et au moins un module récepteur (4) présentant une entrée de données numérique.

5. Circuit selon l'une des revendications 1 à 4, **caractérisé en ce que** deux ou plus de deux bus de données (11) série sont raccordés.

6. Circuit selon la revendication 5, **caractérisé en ce que** les bus de données (11) série sont dissociés les uns des autres au moyen de bridges.

7. Circuit selon l'une des revendications 1 à 6, **caractérisé en ce que** deux ou plus de deux unités de commutation (2) sont prévues, lesquelles sont reliées à un dispositif de transmission (16), auquel le bus de données (11) est raccordé.

8. Circuit selon la revendication 7, **caractérisé en ce qu'**une unité de commutation (2b) est reliée à des modules récepteurs (4) avec entrée de données analogique et une autre unité de commutation (2a) est reliée à des modules récepteurs (3) avec entrée de données numérique.

9. Circuit selon l'une des revendications 1 à 8, **caractérisé en ce que** l'unité de commande centrale commande un noeud de bus (7, 8) série pour le bus de données (11).

10. Circuit selon l'une des revendications 1 à 9, **caractérisé en ce qu'**il présente un décodeur, qui est raccordé par le bus de données (11) série.

11. Circuit selon l'une des revendications 1 à 10, **caractérisé en ce que** des modules récepteurs (3, 4) individuels sont conçus de façon modulaire.

12. Circuit selon la revendication 11, **caractérisé en ce que** l'unité de commutation (2) et les modules récepteurs (3, 4) sont réalisés dans une forme modulaire extensible.

13. Circuit selon l'une des revendications 1 à 12, **caractérisé en ce qu'**un module d'émission peut être actionné par un ou plusieurs terminaux par l'intermédiaire du bus de données série.

14. Circuit selon la revendication 13, **caractérisé en ce qu'**un module d'émission et de réception combiné peut être actionné par un ou plusieurs terminaux par l'intermédiaire du bus de données série (11).

15. Circuit selon l'une des revendications 1 à 14, **caractérisé en ce que** l'unité de commutation (2) est un multicommutateur.

16. Circuit selon l'une des revendications 1 à 15, **caractérisé en ce qu'**une plage de fréquences peut être sélectionnée par le terminal (13) et par l'unité de commutation (2) et **en ce que** les données sont amenées à un module récepteur (3, 4) approprié selon qu'il s'agit de données analogiques ou numériques.
